# EUROPÄISCHE PATENTANMELDUNG

(11) **EP 1 886 555 A1**
(43) Veröffentlichungstag der Anmeldung: **13.02.2008**
(21) Anmeldenummer: 07013258.4
(22) Anmeldetag: 06.07.2007
(51) Int. Cl.: A01K 1/02

(54) **Verfahren zum Betreiben eines Futterstandes für Tiere**

(30) Priorität: 09.08.2006 DE 102006037370
(71) Anmelder: Förster Technik GmbH, 78234 Engen (DE)
(72) Erfinder: Förster, Thomas, 78234 Engen (DE)
(74) Vertreter: Weiss, Peter

(57) **Zusammenfassung**

Bei einem Verfahren zum Betreiben eines Futterstandes (1) für Tiere (7) für Tierfütterung, insbesondere von Jungtieren, bei welchem zumindest eine Nahrungsmittelentnahmestelle (3) vorgesehen ist, soll nach dem Eintreten und/oder nach Beginn einer Nahrungsaufnahme des Tieres im Futterstand (1) der Futterstand (1) automatisch verschlossen werden.

## Beschreibung

Die vorliegende Erfindung betrifft ein Verfahren zum Betreiben eines Futterstandes für Tiere für eine Tierfütterung, insbesondere von Jungtieren, bei welchem zumindest eine Nahrungsmittelentnahmestelle vorgesehen ist.

Herkömmlich wird in herkömmlichen Futterständen mittels Tränkeautomaten, Fütterungsautomaten tierindividuell das Tier mit Nahrungsmittel in flüssiger und/oder fester Form versorgt. Dabei wird über entsprechende Transponder oder andere Tiererkennungseinrichtungen die Nahrungsmittelaufnahme des Tieres überwacht und tierindividuell verabreicht.

Verlässt ein Tier unmittelbar nach der Nahrungsmittelaufnahme den Futterstand, so ist das Sättigungsgefühl beim Tier noch nicht eingetreten. Da jedoch die Abgabe an Nahrungsmittel mengenmässig und tierindividuell beschränkt ist, versucht dann das Tier, da kein Nahrungsmittel mehr zur Verfügung steht, bei anderen Tieren zu saufen, säugen und belästigt andere Tiere aus der Herde, bis das Sättigungsgefühl vorliegt.

Dies schafft innerhalb der Herde Unruhe und ist nicht erwünscht.

Bekannt sind Tränkestände mit mechanischen Schutzvorrichtungen, die bei Eintreten des Tieres den Eintrittsbereich hinter dem Tier verschliessen. Nachteilig an derartigen Tränkeständen ist, dass das Tier lernen muss, eine derartige Vorrichtung zu bedienen. Das Tier benötigt entsprechenden Kraft- und Lernaufwand um in eine derartige Vorrichtung einzutreten.

Der vorliegenden Erfindung liegt daher die Aufgabe zugrunde ein Verfahren der Eingangs genannten Art zu schaffen, welches die genannten Nachteile beseitigt, und mit welchem auf einfache und kostengünstige Weise tierindividuell eine Fütterung möglich ist, ohne dass ein gegenseitiges Besaugen von Tieren, insbesondere von Kälbern nach erfolgter Tränkeaufnahme erfolgt.

Zur Lösung dieser Aufgabe führt, dass nach dem Eintreten und/oder nach Beginn einer Nahrungsaufnahme des Tieres im Futterstand der Futterstand automatisch gesteuert verschlossen wird.

Bei der vorliegenden Erfindung hat es sich als besonders vorteilhaft erwiesen, dass das Tier nach Eintreten in den Futterstand sowie nach Erkennen einer Berechtigung zur Aufnahme von einer bestimmten und bestimmbaren Menge an Nahrungsmittel eine wählbare Zeit lang im Futterstand gehalten wird.

Dabei soll tierindividuell, verhaltens- und rassespezifisch Einfluss genommen werden auf eine bestimmbare Verweilzeit des Tieres während und insbesondere nach erfolgter Tränkeaufnahme im Tränkestand.

Dabei kann eine Verweilzeit bzw. eine Schliesszeit des Verschlusselementes des Futterstandes auf unterschiedliche Weise tierindividuell, verhaltenssowie auch rassespezifisch eingestellt und angepasst werden.

Ferner ist auch denkbar, dass auch altersspezifisch die Schliesszeit des Futterstandes nach und während erfolgter Nahrungsmittelaufnahme eingestellt wird. Ferner soll auch die in Abhängigkeit der aufgenommenen Menge an Nahrungsmittel eine Schliesszeit des Futterstandes tierindividuell einstellbar sein. Auf diese Weise lässt sich für jede Gruppe von unterschiedlichen Tieren, altersabhängig sowie rasseabhängig eine Schliesszeit des Futterstandes exakt ermitteln und steuern, so das nach erfolgter Fütterung und nach Verweilen einer einstellbaren Zeit lang des Tieres im Futterstand sich ein Sättigungsgrad sich sehr genau tierindividuell einstellen lässt, so dass dann nach dem Verlassen des Tieres des Tränkestandes ein gegenseitiges Besaugen der Kälber oder Tiere nicht mehr erfolgt.

Durch die Trennung des Tieres, insbesondere des Kalbes von der restlichen Gruppe, eine gewisse Zeit lang, kann das beidseitige Besaugen deutlich vermindert werden, wobei sich zudem durch eine längere Verweilzeit im Futterstand sich eine Tränkeaufnahme positiv auf das Saugverhalten der Jungtiere, insbesondere Kälber auswirken kann.

Durch die tierindividuelle und tierspezifische Einstellung der Schliesszeiten des Futterstandes während des Tränkens sowie eine einstellbare Zeit darüber hinaus, wird das Tier eine gewisse Zeit lang von der Gruppe isoliert gehalten, um diesem zu gewährleisten, dass ein Saugreiz in dieser Zeit abreagiert wird, bis das entsprechende Sättigungsgefühl bzw. der entsprechende Blutzuckerspiegel, der dafür verantwortlich ist, sich eingestellt hat.

Zudem ist für junge Tiere, insbesondere junge Kälber ein offener Zugang zum Futterstand und ein stressfreier Standbesuch, ohne dass weitere Tiere versuchen, das trinkende Tier abzudrängen, ebenfalls von grossem Vorteil bei der Fütterung von Tieren.

Der geschlossene Futterstand bietet für das Tier, welches Nahrungsmittel zu sich nimmt einen guten Schutz und gewährleistet dennoch, dass sehr viele Tiere über zumindest einen Tränkestand versorgt werden können.

Ferner ist von Vorteil bei der vorliegenden Erfindung für den Tierhalter, dass ein Anlernen des Tieres an die Futterentnahmestelle, insbesondere Saugstelle wesentlich schneller und leichter erfolgt.

Weitere Vorteile, Merkmale und Einzelheiten der Erfindung ergeben sich nachfolgenden Beschreibung bevorzugter Ausführungsbeispiele sowie anhand der Zeichnung; diese zeigen in
Figur 1 eine schematisch dargestellte Draufsicht auf eine Mehrzahl von Futterständen, die als Saugstellen, Tränkestände od. dgl. nebeneinander angeordnet sind;
Figur 2 ein schematisch dargestelltes Ablaufschema auf einen Verfahrensablauf zum Betreiben eines Futterstandes.

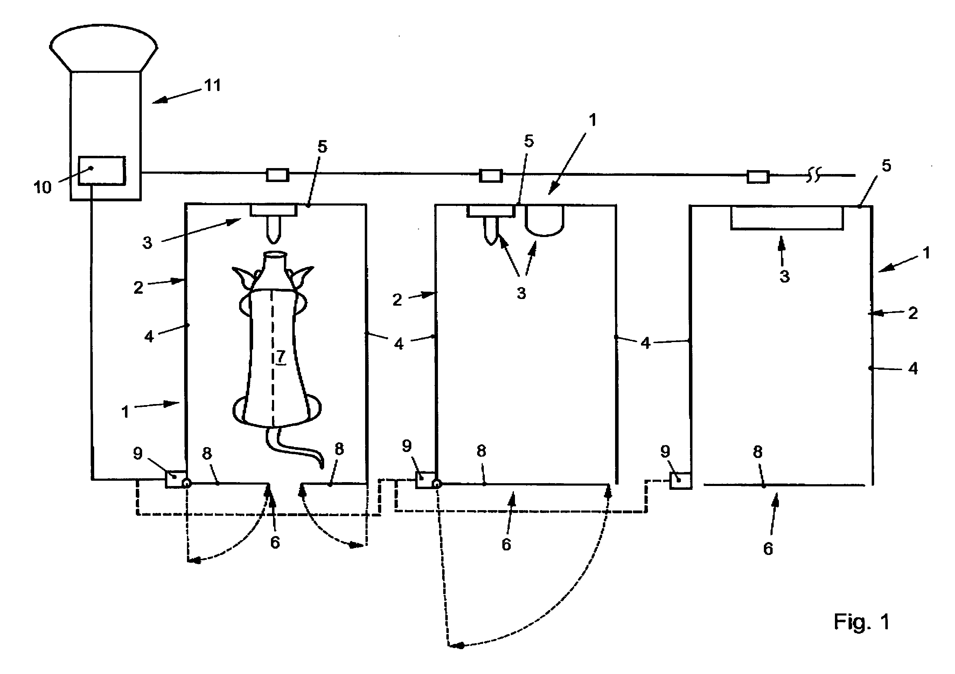

Gemäss Figur 1 ist ein Futterstand 1 als Box 2 ausgebildet, die länglich schmal ausgebildet ist, so dass ein Tier gerade eintreten kann.

Die Box 2 ist stirnseitig mit entsprechenden Nahrungsmittelentnahmestellen 3 versehen, die bspw. als Saugnuckel, als Tränkeschale oder Futterschale für Kraftfutter, Festfutter od. dgl. ausgebildet sein kann.

Hierauf sei die vorliegende Erfindung nicht beschränkt.

Der Futterstand 1 dient begriffsmässig nicht nur zum Aufnehmen von flüssigem Nahrungsmittel für Tiere, sondern auch zur Aufnahme von Kraftfutter, Festfutter od. dgl.. Der Futterstand 1 ist auf die Aufnahme von flüssigem Nahrungsmittel nicht beschränkt.

Der Futterstand 1, insbesondere die Box 2 weist zwei seitliche Begrenzungen 4 und eine stirnseitige Begrenzung 5 auf.

Der stirnseitigen Begrenzung 5 gegenüberliegend, ist eine Eintrittsöffnung 6 gebildet, durch welche ein Tier 7 in den Futterstand 1, insbesondere in die Box 2 eintreten kann.

Die Eintrittsöffnung 6 ist, wie es in Figur 1 angedeutet ist, in jeweiligen dargestellten Tränkeständen 1 mittels Verschlusselementen 8 automatisch verschliessbar.

Dabei kann das Verschlusselement 8 als torartiges Element, torartige Begrenzung, rolltorartig, schiebeartig oder schiebetorartig ausgebildet sein, wobei bevorzugt eine Öffnung nach aussen, wie in Doppelpfeilrichtung dargestellt erfolgt, um die Eintrittsöffnung 6 des Futterstandes 1 zu öffnen oder zu verschliessen.

Ist das Tor als Rolltor oder Schiebetor ausgebildet wird dieses bevorzugt nach oben verschwenkt oder verschoben, um die Eintrittsöffnung 6 des Futterstandes 1 zu öffnen oder zu verschliessen.

Über entsprechende Antriebe 9, die mit einer Steuerung 10 eines Fütterungsautomaten 11 verbunden sind, lassen sich automatisiert die Verschlusselemente 8 öffnen und schliessen.

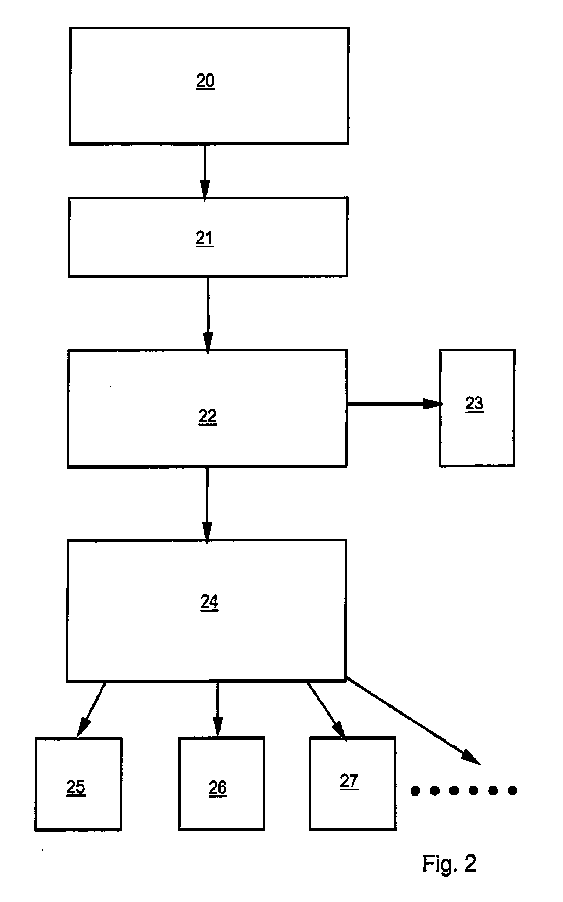

Bei der vorliegenden Erfindung hat sich als besonders vorteilhaft erwiesen, dass, wie es im Ablaufschema gemäss Figur 2 angedeutet ist, in einem ersten Verfahrensschritt der Futterstand 1, insbesondere Tränkestand geöffnet wird.

Nach Öffnen des Futterstandes 1 ist dieser betriebsbereit.

In einem zweiten Verfahrensschritt 21 tritt ein Tier 7 in den Futterstand 1, insbesondere in die Box 2 ein.

Über entsprechende, hier nicht näher dargestellte herkömmliche Transponder sowie Tier-Erkennungssysteme erkennt der Tierfütterungsautomat 11 bzw. seine Steuerung 10, welches Tier 7 sich in dem Futterstand 1 befindet.

Im nächsten Verfahrensschritt 22 erfolgt über die Steuerung 10 des Fütterungsautomaten 11 eine Anspruchsprüfung, tierindividuell, d. h., es wird geprüft, welches Tier 7, welcher Rasse, welches Alters oder welcher Gruppe den Futterstand 1 betreten hat und ob das Tier 7 berechtigt ist, welche Menge von welchem Nahrungsmittel zu empfangen. Hat das Tier 7 keinen Anspruch auf Nahrungsmittel, weil es bspw. innerhalb einer vorgewählten Zeit Nahrungsmittel aufgenommen hat, bleibt der Futterstand 1 offen und es wird kein Nahrungsmittel an der Nahrungsmittelentnahmestelle 3 ausgegeben. Der Futterstand 1 wird im Verfahrensschritt 23 nicht mit Nahrungsmittel versorgt, bleibt offen, bis das Tier 7 den Futterstand 1 wieder verlassen hat.

Erfolgt nach dem Verfahrensschritt 22 eine positive Anspruchsprüfung und hat das Tier 7 Anspruch auf eine bestimmte Menge an Nahrungsmittel in fester und/oder flüssiger Form, so wird in einem nächsten Verfahrensschritt 24 der Futterstand 1 bzw. die Box 2 mittels zumindest eines Verschlusselementes 8 im Bereich der Eintrittsöffnung 6 automatisch verschlossen.

Ein erneutes Öffnen des Futterstandes 1 kann nach verschiedenen Kriterien wählbar in den folgenden, beschriebenen Verfahrensschritten 25, 26 und 27 erfolgen.

Im Verfahrensschritt 25 ist möglich, dass der Futterstand 1 unabhängig von einer teilweise oder vollständigen Aufnahme des zu verabreichenden Nahrungsmittel eine wählbare zeitlang über die erfolgte Zeit der Nahrungsmittelaufnahme hinaus verschlossen bleibt, um das Tier 7 in der Box 2 bzw. im Futterstand 1 eine gewisse wählbare Zeit lang dort zu halten.

Dabei benötigt bspw. ein Tier 7 nur wenige Minuten um bspw. mehrere Liter flüssiges Nahrungsmittel bspw. Milch zu sich zu nehmen. Da der Sättigungsgrad nach dieser kurzen Zeit nicht vollständig erreicht ist, bis ein Sättigungsgefühl auftritt bleibt daher das Tier 7 eine gewünschte und wählbare Zeit lang im Futterstand 1 noch nach der Nahrungsmittelaufnahme festgehalten.

Dabei kann in diesem Verfahrensschritt die Zeit bestimmt werden nach welcher ein Schliessen der Eintrittsöffnung 6 durch das zumindest eine Verschlusselement 8 erfolgt.

In einem anderen Verfahrensschritt 26, kann die Schliesszeit bestimmt werden, ab Beginn der Nahrungsmittelaufnahme im Futterstand 1, so dass dann eine einstellbare und wählbare Zeit lang das Tier im Futterstand 1 festgehalten bleibt, wieder die Eintrittsöffnung 6 durch Öffnen des zumindest einen Verschlusselementes 8 freigegeben wird.

In einem anderen Verfahrensschritt 27 kann die Zeit ermittelt werden, wie lange das Tier 7 benötigt, bis zur vollständigen Nahrungsmittelaufnahme und erst danach wird eine gewählte, gewünschte Zeitspanne nach erfolgter vollständiger Nahrungsmittelaufnahme im Futterstand 1 noch gehalten, bis es wieder durch Öffnen des Verschlusselementes 8 austreten darf.

Zur Sicherung können grosse Zeittoleranzfenster vorgesehen werden, die die Schliesszeit des Verschlusselementes 8 begrenzen, so dass bspw. nach 15 oder 20 Minuten automatisch unabhängig von der erfolgten Nahrungsmittelaufnahme und/oder Verweilzeit ein Öffnen des Futterstandes erfolgt.

Bei der vorliegenden Erfindung hat sich als vorteilhaft erwiesen, dass die Schliesszeit des Futterstandes 1 tierindividuell einzustellen ist, und auf unterschiedliche Weise wählbar eingestellt und berechnet werden kann.

Dabei kann z. B. alters oder verhaltens- und/oder rassespezifisch die Schliesszeit der Futterstandes 1 eingestellt werden. Dies kann auch alters- oder sogar in Abhängigkeit der entnommenen Menge an Nahrungsmittel erfolgen.

Auf diese Weise lassen sich Rassen, die sehr aggressiv sind, nach einem unmittelbaren Tränken, die bei anderen Tieren oder Muttertieren weitersaufen möchten, was Aggressionen in der Herde verursacht, so lange tierindividuell sowie rassenindividuell, altersindividuell oder in Abhängigkeit von der aufgenommenen Menge an flüssigen Nahrungsmitteln in der Tränke gehalten, bis sich beim Tier selbst das Sättigungsgefühl hormonell eingestellt hat, so dass es nach Verlassen der Tränke, nach einer gewissen Zeit lang andere Tiere nicht bspw. durch Tränkeversuche belästigt.

Dabei hat sich ebenfalls als vorteilhaft erwiesen, dass lediglich ein Fütterungsautomat 11 verwendet werden kann, der auch mehrere Futterstände 1 bspw. mit Nahrungsmittel versorgt, wobei nach einer erfolgten Abgabe von Nahrungsmittel an einen Futterstand 1 und während das Tier 7 noch im Futterstand 1 verweilt, weitere benachbarte oder andere Futterstände 1 mit Nahrungsmittel über den gleichen Tränkeautomat 11 versorgt werden können. Dies soll ebenfalls im Rahmen der vorliegenden Erfindung liegen.

Bei dem vorliegenden Futterstand 1, insbesondere im Bereich des Verschlusselementes 8 und/oder dessen Antrieb 9 kann zusätzlich eine Einklemmsicherung vorgesehen sein. Die Einklemmsicherung verhindert, dass ein Kalb beim Verschliessen des Verschlusselementes 8 eingeklemmt wird.

Als Einklemmsicherung können Sensoren am Verschlusselement 8 und/oder an den seitlichen Begrenzungen 4 vorgesehen sein. Ferner kann als Einklemmsicherung eine mechanische Kupplung den Antrieb 9 ausregeln.

Ferner kann als Einklemmsicherung auch ein Kraftsensor bspw. dem Antrieb 9 und/oder dem Verschlusselement 8 zugeordnet sein, der bei Überschreiten eines bestimmten Momentes ein Schliessvorgang unterbindet.

**Bezugszeichenliste**

| | | | | | |
|---|---|---|---|---|---|
| 1 | Futterstand | 34 | | 67 | |
| 2 | Box | 35 | | 68 | |
| 3 | Nahrungsmittelentnahmestelle | 36 | | 69 | |
| 4 | seitliche Begrenzung | 37 | | 70 | |
| 5 | stirnseitige Begrenzung | 38 | | 71 | |
| 6 | Eintrittsöffnung | 39 | | 72 | |
| 7 | Tier | 40 | | 73 | |
| 8 | Verschlusselement | 41 | | 74 | |
| 9 | Antrieb | 42 | | 75 | |
| 10 | Steuerung | 43 | | 76 | |
| 11 | Fütterungsautomat | 44 | | 77 | |
| 12 | | 45 | | 78 | |
| 13 | | 46 | | 79 | |
| 14 | | 47 | | | |
| 15 | | 48 | | | |
| 16 | | 49 | | | |
| 17 | | 50 | | | |
| 18 | | 51 | | | |
| 19 | | 52 | | | |
| 20 | Verfahrensschritt | 53 | | | |
| 21 | Verfahrensschritt | 54 | | | |
| 22 | Verfahrensschritt | 55 | | | |
| 23 | Verfahrensschritt | 56 | | | |
| 24 | Verfahrensschritt | 57 | | | |
| 25 | Verfahrensschritt | 58 | | | |
| 26 | Verfahrensschritt | 59 | | | |
| 27 | Verfahrensschritt | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Verfahren zum Betreiben eines Futterstandes (1) für Tiere für Tierfütterung, insbesondere von Jungtieren, bei welchem zumindest eine Nahrungsmittelentnahmestelle (3) vorgesehen ist,
**dadurch gekennzeichnet,**
**dass** nach dem Eintreten und/oder nach Beginn einer Nahrungsaufnahme des Tieres im Futterstand (1) der Futterstand (1) automatisch gesteuert verschlossen wird.

2. Verfahren nach Anspruch 1, **dadurch gekennzeichnet, dass** der Futterstand (1) mittels zumindest eines Verschlusselementes (8), insbesondere zumindest einer Tür, Tor oder Rolltor stirnseitig automatisiert verschlossen wird, wenn ein Tier (7) in den Futterstand (1) eingetreten ist und nach Ermittlung des Tieres (7) über einen Transponder ein entsprechendes Signal geschaltet wurde, dass das Tier (7) zur Aufnahme von Nahrungsmittel berechtigt war.

3. Verfahren nach Anspruch 1 oder 2, **dadurch gekennzeichnet, dass** das Tier (7), insbesondere das Jungtier oder Kalb nach Eintritt in den Futterstand (1) und nach Verschliessen des Futterstandes (1) eine wählbare und einstellbare Zeit lang im Futterstand (1) eingesperrt gehalten wird.

4. Verfahren nach Anspruch 1 oder 2, **dadurch gekennzeichnet, dass** das Tier (7) nach Eintritt in den Futterstand (1) und nach Beginn der Nahrungsmittelaufnahme durch automatisches Verschliessen des Futterstandes (1) eine wählbare und einstellbare Zeit lang im Futterstand (1) eingesperrt und gehalten bleibt und erst nach Ablauf der gewählten Zeit der Futterstand (1) wieder automatisch geöffnet wird.

5. Verfahren nach wenigstens einem der Ansprüche 1 bis 4, **dadurch gekennzeichnet, dass** nach Eintreten und/oder nach Beginn der Nahrungsmittelaufnahme der Futterstand (1) automatisch verschlossen wird und erst nach erfolgter Nahrungsmittelaufnahme das Tier (7) eine wählbare Zeit lang im Futterstand (1) gehalten wird, wobei bei Überschreiten eines längeren, einstellbaren Zeitraumes automatisch, unabhängig von einer Beendigung der Nahrungsmittelaufnahme der Futterstand (1) wieder automatisch geöffnet wird.

6. Verfahren nach wenigstens einem der Ansprüche 1 bis 5, **dadurch gekennzeichnet, dass** eine Schliesszeit, in welcher das Tier (7) im Futterstand (1) gehalten wird, tierindividuell eingestellt wird.

7. Verfahren nach wenigstens einem der Ansprüche 1 bis 6, **dadurch gekennzeichnet, dass** eine Schliesszeit in welcher das Tier (7) im Futterstand (1) gehalten wird, verhaltens- und/oder rassespezifisch unterschiedlich eingestellt wird.

8. Verfahren nach wenigstens einem der Ansprüche 1 bis 7, **dadurch gekennzeichnet, dass** nach Aufnehmen des Nahrungsmittels aus der Nahrungsmittelentnahmestelle (3) bspw. Nuckel oder Tränkeschale und während das Tier (7) in dem Futterstand (1) eine gewisse Verweilzeit noch nach der Nahrungsmittelaufnahme (3) verbleibt, das Nahrungsmittel an weitere benachbarte oder andere Futterstände (1) zur Verfütterung an weitere Tier (7) bereit gestellt wird.

9. Verfahren nach wenigstens einem der Ansprüche 1 bis 8, **dadurch gekennzeichnet, dass** der Futterstand (1) als Box (2) ausgebildet ist, so dass das Tier (7) lediglich in Längsrichtung in die Box (2) eintreten kann und stirnseitig endseits der Box (2) bzw. des Futterstandes (1) die Nahrungsmittelentnahmestelle (3) als Saugnuckel, Nuckel, Tränkeschale, Futterschale für Kraftfutter od. dgl. vorgesehen ist und andernends stirnseitig das Verschlusselement (8) als Tor oder Türe vorgesehen ist, wobei das Tor nach oben geöffnet bzw. nach unten verschlossen oder das zumindest eine Tor nach aussen geöffnet wird.

10. Verfahren nach wenigstens einem der Ansprüche 1 bis 9, **dadurch gekennzeichnet, dass** als Verweilzeit eine Zeit von etwa 5 bis 20, bevorzugt 10 bis 15 Minuten gewählt wird, in welcher das Tier (7) im Futterstand (1), insbesondere in der Box (2) nach erfolgter Nahrungsmittelaufnahme oder nach Verschliessen, unabhängig von einer erfolgten oder vollständig erfolgten Aufnahme des Nahrungsmittels dort festgehalten wird.

11. Verfahren nach wenigstens einem der Ansprüche 1 bis 10, **dadurch gekennzeichnet, dass** mittels einer Einklemmsicherung ein Öffnen und Schliessen des Futterstandes (1), insbesondere des Verschlusselementes (8) unterbrochen wird.
